# EUROPEAN PATENT SPECIFICATION

(11) **EP 4 532 893 B1**
(45) Date of publication and mention of the grant of the patent: **24.12.2025**
(21) Application number: 23735893.2
(22) Date of filing: 30.05.2023
(51) Int. Cl.: E21B 43/04, E21B 34/06, F16K 11/07, F16K 11/078

(54) **ISOLATION VALVE**
ABSPERRVENTIL
SOUPAPE D'ISOLATION

(30) Priority: 01.06.2022 GB 202208103
(43) Date of publication of application: 09.04.2025
(60) Divisional application: 25213491.1
(73) Proprietor: Weatherford Technology Holdings, LLC, Houston Texas 77056 (US)
(72) Inventor: LHUSSIER, Quentin, Aberdeen AB23 8GX (GB)
(74) Representative: Marks & Clerk LLP
(86) International application number: PCT/US2023/023813
(87) International publication number: WO 2023/235286

(56) References cited:
- WO-A1-2019/125987
- WO-A1-2023/063964
- FR-A1- 3 127 978
- GB-A- 2 623 723
- GB-A- 525 774
- US-A1- 2015 041 130

## Description

### FIELD

The present disclosure relates to an isolation valve.

### BACKGROUND

A gravel packing system is typically made up of a tubing string with two box tubes, generally referred to as shunt tubes, strapped to an outer diameter of a tubular. The shunt tubes are used to convey gravel pack fluids (which may include a slurry of fluid and proppants) into the lower reservoir completions as necessary to support the formation and mitigate sand entering into the production flow path. After a gravel packing operation has been completed it may be desired to close the shunt tubes to prevent unwanted fluids (such as gas which has migrated from the surrounding formation) to travel uphole, for example to surface.

US2015/041130A1 discloses a downhole tool that includes an outer tubular member and an inner tubular member. The outer tubular member has one or more screens, a packer and a shunt tube isolation valve coupled thereto. WO2019/125987A1 discloses an apparatus configured to facilitate a gravel packing operation and zonal isolation. The apparatus comprises a conduit which in an open position allows the flow of gravel pack slurry and in a closed position creates a barrier.

### SUMMARY

The present invention is defined herein in accordance with independent claims 1 and 15. Optional features of the invention are set out in the appended dependent claims.

An aspect of the present disclosure relates to an isolation valve, comprising:
a valve body mountable on or integrally formed with a tubular, the valve body defining an internal surface and an external surface, the internal surface configured to extend around at least a portion of the tubular, wherein the valve body defines a valve pocket located between the internal and external surfaces of the valve body;
a first flow path portion extending within the valve body between a tube inlet and a valve inlet port, the tube inlet being connectable to an inlet tube and the valve inlet port being in communication with the valve pocket;
a second flow path portion extending within the valve body between a valve outlet port and a tube outlet, the valve outlet port being in communication with the valve pocket and the tube outlet being connectable to an outlet tube; and
a valve rod disposed within the valve pocket of the valve body, the valve rod being moveable within the valve pocket between an open position in which the valve inlet port and valve outlet port are in communication with each other, and a closed position in which the valve inlet port and the valve outlet port are isolated from each other, wherein the valve rod comprises a flow guide comprising a recess formed in a side of the valve rod, wherein, when the valve rod is in the open position, the flow guide permits communication between the valve inlet port and the valve outlet port.

The isolation valve may provide a number of technical benefits. For instance, the isolation valve may be used in any application requiring the inlet and outlet tubes to be isolated from each other. In particular, the valve rod being in the closed position may prevent unwanted flow (for example, from a high pressure area to a low pressure area) through the isolation valve. Furthermore, the provision of the valve rod disposed in the wall of the valve body provides for a compact design, which is particularly beneficial for applications performed in restricted spaces, such as downhole in a wellbore.

In one particular example, the isolation valve may define a shunt tube isolation valve configured for use in a gravel packing operation. In this example, the isolation valve may be deployed with the valve rod in the open position to permit flow (for example, a slurry of fluid and proppants) through the valve unimpeded. Once the gravel packing operation has been completed, the valve rod may be moved to the closed position to close the isolation valve preventing unwanted fluids (for example, gas which has migrated from the surrounding formation) to travel uphole.

The tube inlet may be or comprise a shunt tube inlet. The tube outlet may be or comprise a shunt tube outlet. The inlet tube may be or comprise an inlet shunt tube. The outlet tube may be or comprise an outlet shunt tube.

The tube inlet may be located on a first end face of the valve body. The tube outlet may be located on a second end face of the valve body, opposite to the first end face. The valve body may comprise an elongate shape.

The terms "inlet" and "outlet" are used herein as terms of convenience, and are based on flow in a particular direction; however, in the event of a flow reversal, the "inlet" may become the "outlet", and vice versa.

The valve body may be mountable directly to the tubular. The valve body may be mountable to an external surface of the tubular. The valve body may be configured to contact or engage the tubular. Alternatively, the valve body may be mountable indirectly to the tubular. The valve body may be mountable to the tubular via a component, e.g. a component positioned intermediate the valve body and the tubular. The valve body may be configured to extend around at least a portion of a circumference of the tubular. The valve body may comprise a curved profile.

The internal surface of the valve body may be configured to contact or engage the tubular (e.g. an external surface of the tubular) or a component associated with the tubular. The internal surface may extend between the first and second end faces of the valve body. The external surface may extend between the first and second end faces of the valve body. The internal surface may comprise a connector to facilitate mounting of the valve body to the tubular.

The valve body may be integrally formed with the tubular by any suitable process, such as additive manufacturing.

The valve pocket may be located within the valve body between the internal and external surfaces of the valve body, e.g. radially between the internal and external surfaces of the valve body. The valve rod may be located between (e.g. radially between) the internal and external surfaces of the valve body. The valve pocket may comprise a generally cylindrical shape, e.g. a generally cylindrical bore within the valve body. The valve rod may comprise a generally cylindrical shape, e.g. a generally cylindrical rod. The shape of the valve rod may correspond to the shape of the valve pocket.

The valve rod may define a longitudinal axis. The valve pocket may define a longitudinal axis. The longitudinal axis of the valve rod may be arranged coincident with the longitudinal axis of the valve pocket. The longitudinal axis of the valve rod may be arranged in a parallel manner with respect to a central, longitudinal axis of the tubular. The longitudinal axis of the valve rod may be arranged in an offset manner with respect to the central, longitudinal axis of the tubular.

When the valve rod is in the open position, the valve rod may permit communication between the first and second flow path portions to permit flow through the isolation valve. When the valve rod is in the closed position, the valve rod may isolate the first flow path portion and the second flow path portion from each other to prevent flow through the isolation valve.

The first flow path portion may comprise a component extending at an angle with respect to the longitudinal axis of the valve pocket. The first flow path portion may follow a nonlinear path. The first flow path portion may follow a path comprising a circumferential and/or lateral component. The first flow path portion may follow a path comprising a curved component.

The second flow path portion may comprise a component extending at an angle with respect to the longitudinal axis of the valve pocket. The second flow path portion may follow a nonlinear path. The second flow path portion may follow a path comprising a circumferential and/or lateral component. The second flow path portion may follow a path comprising a curved component.

The first and second flow path portions may be axially spaced from each other. The first and second flow path portions may be separated from each other due to the circumferential and/or lateral components of the first and second flow path portions directing the first and second flow path portions away from each other. The circumferential and/or lateral components of the first and second flow path portions may direct the first and second flow path portions towards the valve pocket.

The tube inlet and the tube outlet may be circumferentially aligned. The tube inlet and the tube outlet may be circumferentially misaligned.

The valve pocket may be formed adjacent the first and/or second flow path portions. The valve pocket may extend in a parallel manner relative to the first and/or second flow path portions.

The valve pocket may be sized in accordance with a size of the valve rod. For example, the valve pocket may comprise a length equal to or greater than a length of the valve rod. The valve pocket may comprise a diameter determined in accordance with a diameter of the valve rod.

The valve pocket may comprise at least one closed end. The closed end(s) may be provided with means for mitigating hydraulic lock of the valve rod within the valve pocket. The valve pocket may comprise at least one open end. The open end(s) may be configured to be exposed to one of an annulus pressure and a tubular pressure. For example, one open end may be configured to be exposed to the annulus pressure and the other open end may be configured to be exposed to the tubular pressure. Alternatively, both ends may be configured to be exposed to the annulus pressure.

The isolation valve may comprise a geometry configured to mitigate erosive damage to the isolation valve. For example, the first and/or second flow path portions may comprise a varying flow area. The varying flow area may function to vary a flowrate through the isolation valve. This may be beneficial for certain applications of the isolation valve, such as gravel packing operations, which require a mixture or slurry of proppants and fluid to be transported downhole. Such a mixture can be highly erosive, especially since the proppants (having a higher inertia than the fluid) may collide with the outer surface of the region causing erosive damage. Therefore, providing the first and/or second flow path portions with a varying flow area may reduce the flowrate of the mixture entering the region before the proppants can reach the outer surface of the region. This may assist in mitigating erosive damage to the isolation valve, as well as reducing the risk of blockage.

The varying flow area may be such that the first flow path portion may increase and/or decrease in flow area from the tube inlet to the valve inlet port. The second flow path portion may increase and/or decrease in flow area from the valve outlet port to the tube outlet. The first and/or second flow path portions may comprise a region of increased flow area relative to a flow area of the inlet and/or outlet tube connectable to the isolation valve.

The down isolation valve may comprise an erosion resistant coating, cladding, etc. The first and second flow path portions may comprise an erosion resistant coating, cladding, etc. The valve rod may comprise an erosion resistant coating, cladding, etc.

The valve rod may define a flow guide. When the valve rod is in the open position, the flow guide may be aligned with the valve inlet port and the valve outlet port. When the valve rod is in the open position, the flow guide may permit communication between the first flow path portion and the second flow path portion. When the valve rod is in the open position, the flow guide may permit communication between the tube inlet and the tube outlet. The flow guide may be configured to direct flow from the tube inlet towards the tube outlet, and/or the tube outlet towards the tube inlet.

The flow guide may comprise an erosion resistant coating, cladding, etc.

When the valve rod is in the closed position, the flow guide may be misaligned with at least one of the valve inlet port and the valve outlet port. When the valve rod is in the closed position, the flow guide may be misaligned with at least one of the first flow path portion and the second flow path portion. When the valve rod is in the closed position, the valve rod may isolate the first flow path portion and the second flow path portion from each other.

The flow guide may comprise a component extending at an angle with respect to the longitudinal axis of the valve pocket. The flow guide may follow a nonlinear path. The flow guide may follow a path comprising a circumferential and/or lateral component. The flow guide may follow a path comprising a curved component.

The valve rod may be configured to move axially relative to the valve body. The valve rod may be configured to translate axially relative to the valve body. The valve rod may be configured to translate within the valve pocket of the valve body. The valve rod may be configured to translate between the open and closed positions. As the valve rod translates within the valve body the flow guide may move from alignment with the valve inlet port and the valve outlet port to misalignment with at least one of the valve inlet port and the valve outlet port, and/or vice versa.

The valve rod may be configured to rotate within the valve body. The valve rod may be configured to rotate about the longitudinal axis of the valve rod. The valve rod may be configured to rotate within the valve pocket. The valve rod may be configured to rotate between the open and closed positions. As the valve rod rotates within the valve pocket the flow guide may move from alignment with the valve inlet port and the valve outlet port to misalignment with at least one of the valve inlet port and the valve outlet port, and/or vice versa. As the valve rod rotates within the valve body the flow guide may move from alignment with the first and second flow path portions to misalignment with at least one of the first and second flow path portions, and/or vice versa. The valve rod may comprise one or more bearing surfaces, for example provided at either or both ends of the valve rod, to permit rotation of the valve rod relative to the valve body.

The tube isolation valve may define a number of flow path sections. In one example, the tube isolation valve may define five flow path sections. The first flow path portion may define the first and second sections. The first section may follow a linear path extending from the tube inlet. The second section may comprise a component extending at an angle with respect to the longitudinal axis of the valve pocket. The second section may follow a nonlinear path. The second section may follow a path comprising a circumferential and/or lateral component. The second section may follow a path comprising a curved component.

The valve rod (for example, the flow guide of the valve rod) may define the third section of the isolation valve. The third section may comprise a component extending at an angle with respect to the longitudinal axis of the valve pocket. The third section may follow a nonlinear path. The third section may follow a path comprising a circumferential and/or lateral component. The third section may follow a path comprising a curved component.

The second flow path portion may define the fourth and fifth sections. The fourth section may comprise a component extending at an angle with respect to the longitudinal axis of the valve pocket. The fourth section may follow a nonlinear path. The fourth section may follow a path comprising a circumferential and/or lateral component. The fourth section may follow a path comprising a curved component. The fifth section may follow a linear path extending to the tube outlet.

When the valve rod is in the open position, the third section may be aligned with the second and fourth sections, permitting flow through the isolation valve. When the valve rod is in the closed position, the third section may be misaligned with the second and fourth sections, preventing flow through the isolation valve.

The isolation valve may comprise a drive arrangement. The drive arrangement may be configured to move the valve rod between the open and closed positions.

The drive arrangement may comprise a valve actuator. The valve actuator may be configured to move the valve rod between the open and closed positions. The valve actuator may be configured to translate relative to the valve body. The valve actuator may be configured to translate internally of the valve body. Translation of the valve actuator may be configured to produce a corresponding movement of the valve rod. The valve actuator may be moved between positions corresponding to the open and closed positions of the valve rod. The valve actuator may comprise a sleeve disposed internally of the valve body.

The drive arrangement may comprise a drive member. The drive member may be configured to connect the valve rod to the valve actuator. The drive member may be configured to drive movement of the valve rod between the open position and the closed position. The drive member may comprise a radial extension. The drive member may comprise a pin or bar.

The valve rod may comprise a connector. The connector may be configured for connection to the drive member. The connector may comprise a lock/key, a notch, indent, recess, etc., formed in or on the valve rod. Where the valve rod is configured to rotate within the valve body, the connector of the valve rod may comprise a helical slot arrangement for receiving the drive member. In this example, translation of the drive member relative to the valve rod may produce (by cooperation with the helical slot arrangement) rotation of the valve rod within the valve body.

The drive arrangement (for example, the valve actuator) may comprise a latch mechanism. The latch mechanism may comprise a profile configured to be engaged by a downhole tool (such as a shifting tool). The drive arrangement may be configured such that an axial force (for example, in an uphole direction) applied by the downhole tool operates the drive arrangement to move the valve rod between the open and closed positions. In an example, the downhole tool may be configured to move the valve rod only from the open position to the closed position. This may be adequate when closing the isolation valve is required only after a particular operation has been completed.

The isolation valve may comprise a sealing arrangement. The valve rod may comprise the sealing arrangement. When the valve rod is in the closed position, the sealing arrangement may be configured to sealingly isolate the valve inlet port and the valve outlet port from each other. When the valve rod is in the closed position, the sealing arrangement may be configured to sealingly isolate the first flow path portion and the second flow path portion from each other (and thus the tube inlet from the tube outlet). When the valve rod is in the open position, the sealing arrangement may be configured to seal the valve rod against the valve pocket so as to seal the valve inlet port and the valve outlet port (and thus the first and second flow path portions) with the flow guide, to prevent unwanted leakage from the valve body.

The sealing arrangement may comprise a plurality of sealing elements. The sealing elements may be disposed along a length of the valve rod. The sealing elements may be disposed in circumferential grooves formed in or on the valve rod. The circumferential grooves may be formed along a length of the valve rod. The sealing elements may comprise one or more dynamic seals permitting relative movement between the valve rod and the valve body (whether such movement is due to translation or rotation of the valve rod, as described hereinabove). Two of the plurality of sealing elements may be located either side of the flow guide.

The valve rod may include a side sealing element. The side sealing element may be located on a side face of the valve rod. When the valve rod is in the closed position, the side sealing element may be configured to isolate the valve inlet port and the valve outlet port from each other. When the valve rod is in the closed position, the side sealing element may be configured to isolate the first and second flow path portions from each other and thereby prevent flow through the isolation valve. The side sealing element may be configured to seal one or both of the first flow path portion and the second flow path portion when the valve rod is in the closed position. The side sealing element may comprise a diameter or perimeter corresponding to, or slightly larger than, a diameter or perimeter of the valve inlet port and/or the valve outlet port. The side sealing element may be configured to seal around or circumscribe one or both of the valve inlet port and the valve outlet port.

The tube inlet and the tube outlet may be provided with one or more coupling mechanisms for connection to one or more tubes. The tube inlet and the tube outlet may comprise a flow area substantially corresponding to a flow area of the inlet tube and the outlet tube, respectively.

The isolation valve may comprise an asymmetrical shape. The isolation valve may comprise an eccentric shape. The valve body may comprise an asymmetrical shape. The isolation valve may comprise a number of segments. The valve body may comprise a number of segments. The segments may be circumferential segments. The isolation valve may comprise a first segment comprising the first and second flow path portions and the valve pocket, wherein the first segment may comprise a first thickness. The isolation valve may comprise a second segment not including the first and second flow path portions or the valve rod (for example, the second segment may be diametrically opposite the first segment), wherein the second segment may comprise a second thickness. The first thickness may be greater than the second thickness.

The isolation valve may comprise a clamshell arrangement. The valve body may comprise a clamshell arrangement. The first and second segments may be assembled together around the tubular, for example bolted together around the tubular.

The isolation valve may comprise a fastener mechanism. The fastener mechanism may be configured to secure the valve body on the tubular. The valve body may be positioned around an external surface of the tubular. The second segment described hereinabove may define the fastener mechanism of the isolation valve.

The first and second flow path portions and the valve rod may be located in a single segment. In this regard, the valve body may be considered as consisting of the single segment, which segment may only be configured to extend around a part of the circumference of the tubular, with the fastener mechanism configured to extend around the rest of the circumference of the tubular. Alternatively, the valve body may be defined as comprising both the first and second segments (without defining one of the segments as a fastener mechanism), or the valve body may comprise a single segment defining a valve sleeve.

The isolation valve may comprise the tubular which the valve body is mountable on. The valve body may be mounted on the tubular. The valve body may be separate and capable of being mounted on or partially around an outer surface of the tubular. However, in other examples the valve body may be partly or fully integrated or integrally formed with the tubular.

The valve actuator may be disposed inside of an inner surface of the tubular. The valve actuator may be disposed internally of the tubular. For example, the valve actuator may be slideably disposed internally of the tubular. In this regard, the valve actuator may translate relative to both the valve body and the tubular. The tubular may provide support to the valve body and the valve actuator. The tubular may provide a support for the valve actuator and the valve rod to be moved relative to the valve body. The tubular may be or comprise a base pipe or support pipe.

Alternatively, other forms of valve actuator may be used. For example, the valve actuator may comprise a piston arrangement. The piston arrangement may be configured to drive movement of the valve rod between the open and closed positions. The piston arrangement may be configured to be controlled from surface. The piston arrangement may be controlled from surface using any method known in the art, such as via a dropped object (e.g. ball or dart), via one or more control lines (e.g. electrical or hydraulic) extending from surface, etc. The control lines may be configured to deliver pressure to one or more piston chambers to drive movement of the valve rod. Alternatively, the piston arrangement may be configured to be actuated in response to a downhole condition change, such as a change in pressure, temperature, flowrate, etc. The piston arrangement may be controlled via ATM chambers and/or downhole drives/pumps.

In one example, the valve rod may define a piston. For example, where the valve pocket is provided with open ends, as described hereinabove, movement of the valve rod may be driven by a pressure differential acting across the valve rod created by differences in the annulus pressure and the tubular pressure. Alternatively, where the valve pocket is provided with at least one closed end, the valve pocket may define a piston chamber at the at least one the closed (that is, at either or both ends of the valve rod). Hydraulic control lines may be provided to deliver pressure to the piston chambers to create a desired pressure differential across the valve rod.

The isolation valve may comprise electronics. The isolation valve may comprise a controller. The isolation valve may be powered by power line(s) from surface. The isolation valve may comprise a power supply. The power supply may comprise a battery and/or a generator. The isolation valve may comprise a receiver. The receiver may be configured to receive a signal (for example, acoustic signal, EM signal, pressure signal, etc.). The signal may be configured to be received by an RFID tag associated with the isolation valve. The signal may be sent from surface. The signal may be sent from a downhole location, for example relayed from surface. The isolation valve may communicate to and from surface via communications line(s) from surface. The drive arrangement may be configured to be actuated in response to receipt of the signal. The valve actuator may be configured to be actuated in response to receipt of the signal. The receiver may be configured to communicate with the controller. The controller may be configured to actuate the drive arrangement. The controller may be configured to actuate the valve actuator. For example, where the valve actuator comprises a piston arrangement, the piston may be actuated in response to receipt of the signal.

The isolation valve may comprise an axial shoulder. The tubular may comprise the axial shoulder. The axial shoulder may be configured to limit axial movement of the valve actuator. The axial shoulder may protect the drive member from axial loads and damage.

The tubular may define an axial slot. The tubular may be oriented such that the axial slot is positioned between the valve actuator and the valve rod. The drive member may radially extend through the axial slot into connection with the connector of the valve rod. The axial slot may comprise a length sufficient to allow the drive member to travel enough distance to move the valve rod between the open and closed positions.

The tubular may be configured for connection to other tubular members at either or both ends of the tubular. The tubular may be configured to be connected to or form part of a tubular string for use in a wellbore. The tubular may comprise threaded ends. The isolation valve may form a sub for a tubular string. In one example, the tubular string may be for use in a gravel packing operation.

The tube inlet, tube outlet, valve inlet port and valve outlet port described hereinabove may define a first tube inlet, first tube outlet, first valve inlet port and first valve outlet port, respectively.

A third flow path portion may extend within the valve body between a second valve inlet port and a second tube inlet port. The second valve inlet port may be in communication with the second valve pocket and the second tube inlet may be connectable to a second inlet tube.

A fourth flow path portion may extend within the valve body between a second valve outlet port and a second tube outlet port. The second valve outlet port may be in communication with the valve pocket and the second tube outlet may be connectable to a second outlet tube.

The second valve inlet port and second valve outlet port may be located on an opposite side of the valve pocket than that of the first valve inlet port and first valve outlet port.

In the open position the valve rod may permit communication between the second tube inlet and the second tube outlet. In the closed position the valve rod may isolate the second valve inlet port and the second valve outlet port from each other.

The third and/or fourth flow path portions may be located adjacent the first and/or second flow path portions. The third and/or fourth flow path portions may extend in a parallel manner relative to the first and/or second flow path portions. The valve pocket of the valve body may be located between (for example, circumferentially or laterally between) the first and/or second flow path portions and third and/or fourth flow path portions. The second tube inlet and the second tube outlet may be axially aligned or misaligned.

The third and/or fourth flow path portions may comprise many of the same features as the first and/or second flow path portions. Therefore, a detailed description of most of these features in relation to the third and/or fourth flow path portions has been omitted for brevity. However, it is intended that the features described in relation to the first and/or second flow path portions may also apply to the third and/or fourth flow path portions.

The valve rod may comprise a second flow guide.

When the valve rod is in the open position the second flow guide may be aligned with the second valve inlet port and the second valve outlet port. When the valve rod is in the open position the second flow guide may be aligned with the third flow path portion and the fourth flow path portion. When the valve rod is in the open position the second flow guide may permit communication between the third and fourth flow path portions.

When the valve rod is in the closed position the second flow guide may be misaligned with the second valve inlet port and the second valve outlet port. When the valve rod is in the closed position the second flow guide may be misaligned with the second valve inlet port and the second valve outlet port (and thus the third flow path portion and the fourth flow path portion). When the valve rod is in the closed position, the valve rod may prevent communication between the third and fourth flow path portions.

When the valve rod moves into the closed position the first and second tube inlets may and the respective first and second tube outlets may become isolated from each other simultaneously.

The second flow guide may be axially spaced along the valve rod from the first flow guide. The second flow guide may comprise a recess or pocket formed in a side wall of the valve rod opposite to the side comprising the first flow guide. In other examples, the second flow guide may comprise a passageway extending from one side of the valve rod to an opposite side of the valve rod.

The valve body may define further flow path portions and the valve rod may comprise further flow guides, which may correspond to the number of flow path portions.

The isolation valve may comprise multiple valve bodies. The multiple valve bodies may be configured to be locatable around at least part of an outer diameter of the tubular. The isolation valve may comprise multiple valve rods. The valve rods may each be associated with one or more flow path portions.

Another aspect of the present disclosure relates to a method for isolating a tube, the method comprises:
providing an isolation valve comprising a valve body mounted on or integrally formed with a tubular, the valve body defining an internal surface and an external surface, the internal surface configured to extend around at least a portion of the tubular, wherein the valve body defines a valve pocket located between the internal and external surfaces of the valve body, wherein a first flow path portion extends within the valve body between a tube inlet and a valve inlet port, the tube inlet being connectable to an inlet tube and the valve inlet port being in communication with the valve pocket, and wherein a second flow path portion extends within the valve body between a valve outlet port and a tube outlet, the valve outlet port being in communication with the valve pocket and the tube outlet being connectable to an outlet tube, wherein the valve rod comprises a flow guide comprising a recess formed in a side of the valve rod, wherein, when the valve rod is in the open position, the flow guide permits communication between the valve inlet port and the valve outlet port;
providing a valve rod disposed in the valve pocket in one of an open position and a closed position, wherein in the open position the valve inlet port and valve outlet port are in communication with each other, and in the closed position the valve inlet port and valve outlet port are isolated from each other; and
moving the valve rod within the valve pocket to the other one of the open position and the closed position.

The method may comprise flowing a fluid through the isolation valve. The method may comprise flowing a slurry through the isolation valve. The slurry may comprise a mixture of fluid and proppants (for example, for use in a gravel packing operation).

The method may comprise ceasing flow through the isolation valve and then moving the valve rod within the valve pocket from the open position to the closed position.

In one example, the isolation valve may be or comprise a shunt tube isolation valve. The tube inlet may be or comprise a shunt tube inlet. The tube outlet may be or comprise a shunt tube outlet. The inlet tube may be or comprise an inlet shunt tube. The outlet tube may be or comprise an outlet shunt tube.

The method may comprise moving a flow guide of the valve rod from alignment with the valve inlet port and the valve outlet port (and thus the first and second flow path portions) to misalignment with the valve inlet port and the valve outlet port (and thus the first and second flow path portions).

The method may comprise isolating the first flow path portion and the second flow path portion from each other.

The method may comprise translating the valve rod within the valve pocket between the open position and the closed position.

The method may comprise rotating the valve rod within the valve pocket between the open position and the closed position.

The tube inlet, tube outlet, valve inlet port and valve outlet port described hereinabove may define a first tube inlet, first tube outlet, first valve inlet port and first valve outlet port, respectively.

The method may comprise providing a third flow path portion extending within the valve body between the second valve inlet port and the second tube inlet port. The second valve inlet port may be in communication with the valve pocket and the second tube inlet may be connectable to a second inlet tube. The method may comprise providing a fourth flow path portion extending within the valve body between the second valve outlet port and the second tube outlet port. The second valve outlet port may be in communication with the valve pocket and the second tube outlet may be connectable to a second outlet tube.

The method may comprise isolating the first tube inlet and the first tube outlet from each other and isolating the second tube inlet and the second tube outlet from each other, for example simultaneously.

The method may comprise isolating the third flow path portion and the fourth flow path portion from each other.

The method may comprise operating a drive arrangement of the isolation valve to move the valve rod from the closed position to the open position.

The method may comprise sealingly isolating the first flow path portion and the second flow path portion from each other when the valve rod is in the closed position. The method may comprise sealingly isolating the third flow path portion and the fourth flow path portion from each other when the valve rod is in the closed position.

The method may comprise engaging a latch mechanism of the drive arrangement (for example, of the valve actuator) with a downhole tool (such as a shifting tool) to operate the drive arrangement and move the valve rod between the open and closed positions.

The method may comprise moving the valve rod back and forth between the closed position and the open position.

Another aspect of the present disclosure relates to a gravel packing system comprising an inlet shunt tube, an outlet shunt tube and an isolation valve, the isolation valve comprising:
a valve body mountable on or integrally formed with a tubular, the valve body defining an internal surface and an external surface, the internal surface configured to extend around at least a portion of the tubular, wherein the valve body defines a valve pocket located between the internal and external surfaces of the valve body;
a first flow path portion extending within the valve body between a shunt tube inlet and a valve inlet port, the shunt tube inlet being connected to the inlet shunt tube and the valve inlet port being in communication with the valve pocket;
a second flow path portion extending within the valve body between a valve outlet port and a shunt tube outlet, the valve outlet port being in communication with the valve pocket and the shunt tube outlet being connected to the outlet shunt tube; and
a valve rod disposed within the valve pocket of the valve body, the valve rod being moveable within the valve pocket between an open position in which the inlet shunt and the outlet shunt tube are in communication with each other, and a closed position in which the inlet shunt tube and the outlet shunt tube are isolated from each other, wherein the valve rod comprises a flow guide comprising a recess formed in a side of the valve rod, wherein, when the valve rod is in the open position, the flow guide permits communication between the valve inlet port and the valve outlet port.

Another aspect of the present disclosure relates to a method for use in a gravel packing operation, the method comprising:
providing an isolation valve comprising a valve body mounted on or integrally formed with a tubular, the valve body defining an internal surface and an external surface, the internal surface configured to extend around at least a portion of the tubular, wherein the valve body defines a valve pocket located between the internal and external surfaces of the valve body, wherein a first flow path portion extends within the valve body between a shunt tube inlet and a valve inlet port, the shunt tube inlet being connected to an inlet shunt tube and the valve inlet port being in communication with the valve pocket, and wherein a second flow path portion extends within the valve body between a valve outlet port and a shunt tube outlet, the valve outlet port being in communication with the valve pocket and the shunt tube outlet being connected to an outlet shunt tube, wherein the valve rod comprises a flow guide comprising a recess formed in a side of the valve rod, wherein, when the valve rod is in the open position, the flow guide permits communication between the valve inlet port and the valve outlet port;
providing a valve rod disposed in the valve pocket in an open position, wherein in the open position the valve inlet port and valve outlet port are in communication with each other;
pumping a slurry through the inlet shunt tube, isolation valve and outlet shunt tube; and
moving the valve rod within the valve pocket to a closed position in which the valve inlet port and valve outlet port are isolated from each other.

It should be understood that features described hereinabove in relation to any one aspect may be combined with other aspects described herein.

The isolation valve or any aspect defined herein, or any individual component or groups of components, may be manufactured in any suitable manner.

In some examples the disclosed isolation valve, or any individual component or groups of components may be manufactured by additive manufacturing. Such described additive manufacturing typically involves processes in which components are fabricated based on three-dimensional (3D) information, for example a three-dimensional computer model (or design file), of the component.

Accordingly, examples described herein not only include the isolation valve and associated components, but also methods of manufacturing the isolation valve or associated components via additive manufacturing and computer software, firmware or hardware for controlling the manufacture of the isolation valve and associated components via additive manufacturing. All future reference to "product" are understood to include the described isolation valve and all associated components.

The structure of the product may be represented digitally in the form of a design file. A design file, or computer aided design (CAD) file, is a configuration file that encodes one or more of the surface or volumetric configuration of the shape of the product. That is, a design file represents the geometrical arrangement or shape of the product.

Design files may take any now known or later developed file format. For example, design files may be in the Stereolithography or "Standard Tessellation Language" (.stl) format which was created for stereolithography CAD programs of 3D Systems, or the Additive Manufacturing File (.amf) format, which is an American Society of Mechanical Engineers (ASME) standard that is an extensible markup-language (XML) based format designed to allow any CAD software to describe the shape and composition of any three-dimensional object to be fabricated on any additive manufacturing printer.

Further examples of design file formats include AutoCAD (.dwg) files, Blender (.blend) files, Parasolid (.x_t) files, 3D Manufacturing Format (.3mf) files, Autodesk (3ds) files, Collada (.dae) files and Wavefront (.obj) files, although many other file formats exist.

Design files may be produced using modelling (e.g. CAD modelling) software and/or through scanning the surface of a product to measure the surface configuration of the product.

Once obtained, a design file may be converted into a set of computer executable instructions that, once executed by a processer, cause the processor to control an additive manufacturing apparatus to produce a product according to the geometrical arrangement specified in the design file. The conversion may convert the design file into slices or layers that are to be formed sequentially by the additive manufacturing apparatus. The instructions (otherwise known as geometric code or "G-code") may be calibrated to the specific additive manufacturing apparatus and may specify the precise location and amount of material that is to be formed at each stage in the manufacturing process. The formation may be through deposition, through sintering, or through any other form of additive manufacturing method.

The code or instructions may be translated between different formats, converted into a set of data signals and transmitted, received as a set of data signals and converted to code, stored, etc., as necessary. The instructions may be an input to the additive manufacturing system and may come from a part designer, an intellectual property (IP) provider, a design company, the operator or owner of the additive manufacturing system, or from other sources. An additive manufacturing system may execute the instructions to fabricate the product using any of the technologies or methods disclosed herein.

Design files or computer executable instructions may be stored in a (transitory or non-transitory) computer readable storage medium (e.g., memory, storage system, etc.) storing code, or computer readable instructions, representative of the product to be produced. As noted, the code or computer readable instructions defining the product that may be used to physically generate the object, upon execution of the code or instructions by an additive manufacturing system. For example, the instructions may include a precisely defined 3D model of the product and may be generated from any of a large variety of well-known computer aided design (CAD) software systems such as AutoCAD^{®}, TurboCAD^{®}, DesignCAD 3D Max, etc. Alternatively, a model or prototype of the component may be scanned to determine the three-dimensional information of the component.

Accordingly, by controlling an additive manufacturing apparatus according to the computer executable instructions, the additive manufacturing apparatus may be instructed to print out the product.

In light of the above, embodiments include methods of manufacture via additive manufacturing. This includes the steps of obtaining a design file representing the product and instructing an additive manufacturing apparatus to manufacture the product in assembled or unassembled form according to the design file. The additive manufacturing apparatus may include a processor that is configured to automatically convert the design file into computer executable instructions for controlling the manufacture of the product. In these embodiments, the design file itself may automatically cause the production of the product once input into the additive manufacturing device. Accordingly, in this embodiment, the design file itself may be considered computer executable instructions that cause the additive manufacturing apparatus to manufacture the product. Alternatively, the design file may be converted into instructions by an external computing system, with the resulting computer executable instructions being provided to the additive manufacturing device.

Given the above, the design and manufacture of implementations of the subject matter and the operations described in this specification may be realised using digital electronic circuitry, or in computer software, firmware, or hardware, including the structures disclosed in this specification and their structural equivalents, or in combinations of one or more of them. For instance, hardware may include processors, microprocessors, electronic circuitry, electronic components, integrated circuits, etc. Implementations of the subject matter described in this disclosure may be realised using one or more computer programs, i.e., one or more modules of computer program instructions, encoded on computer storage medium for execution by, or to control the operation of, data processing apparatus. Alternatively or in addition, the program instructions may be encoded on an artificially generated propagated signal, e.g., a machine-generated electrical, optical, or electromagnetic signal that is generated to encode information for transmission to suitable receiver apparatus for execution by a data processing apparatus. A computer storage medium may be, or be included in, a computer-readable storage device, a computer-readable storage substrate, a random or serial access memory array or device, or a combination of one or more of them. Moreover, while a computer storage medium is not a propagated signal, a computer storage medium may be a source or destination of computer program instructions encoded in an artificially generated propagated signal. The computer storage medium may also be, or be included in, one or more separate physical components or media (e.g., multiple CDs, disks, or other storage devices).

Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, one skilled in the art will appreciate that the methods and structures disclosed herein may be practiced with any additive manufacturing technique or other manufacturing technology.

Another aspect of the present disclosure relates to a computer program comprising computer executable instructions that, when executed by a processor, cause the processor to control an additive manufacturing apparatus to manufacture the described isolation valve.

Another aspect of the present disclosure relates to a method of manufacturing an isolation valve or a component thereof via additive manufacturing, the method comprising:
obtaining an electronic file representing a geometry of the described isolation valve or component thereof; and
controlling an additive manufacturing apparatus to manufacture, over one or more additive manufacturing steps, the isolation valve or component thereof according to the geometry specified in the electronic file.

Aspects of the disclosure described may include one or more examples, embodiments or features in isolation or in various combinations whether or not specifically stated (including claimed) in that combination or in isolation.

### BRIEF DESRIPTION OF THE DRAWINGS

These and other aspects of the present disclosure will now be described, by way of example only, with reference to the accompanying drawings, in which:
Figure 1 is a perspective cross-sectional illustration of an isolation valve in an open position;
Figure 2 is a cross-sectional top view of the isolation valve of Figure 1;
Figure 3 is a cross-sectional side view of the isolation valve of Figure 1;
Figure 4 is a perspective illustration of a valve rod of the isolation valve of Figure 1;
Figure 5 is a perspective illustration of a valve body of the isolation valve of Figure 1;
Figure 6 is a perspective cross-sectional view of the isolation valve of Figure 1;
Figure 7 is a perspective cross-sectional illustration of the isolation valve of Figure 1, in a closed position;
Figure 8 is a cross-sectional top view of the isolation valve of Figure 7;
Figure 9 is a cross-section side view of the isolation valve of Figure 7;
Figure 10 is a perspective cross-sectional illustration of another isolation valve, in an open position;
Figure 11 is a cross-sectional top view of the isolation valve of Figure 10;
Figure 12 is a cross-section side view of the isolation valve of Figure 10;
Figure 13 is a perspective illustration of a valve rod of the isolation valve of Figure 10;
Figure 14 is a perspective illustration of a valve body of the isolation valve of Figure 10;
Figure 15 is a perspective cross-sectional view of the isolation valve of Figure 10;
Figure 16 is a perspective cross-sectional illustration of the isolation valve of Figure 10, in a closed position;
Figure 17 is a cross-sectional top view of the isolation valve of Figure 16;
Figure 18 is a cross-sectional side view of the isolation valve of Figure 16;
Figure 19 is a perspective cross-sectional illustration of a further isolation valve, in an open position; and
Figure 20 is a perspective cross-sectional illustration of the isolation valve of Figure 19, in a closed position.

### DETAILED DESRIPTION OF THE DRAWINGS

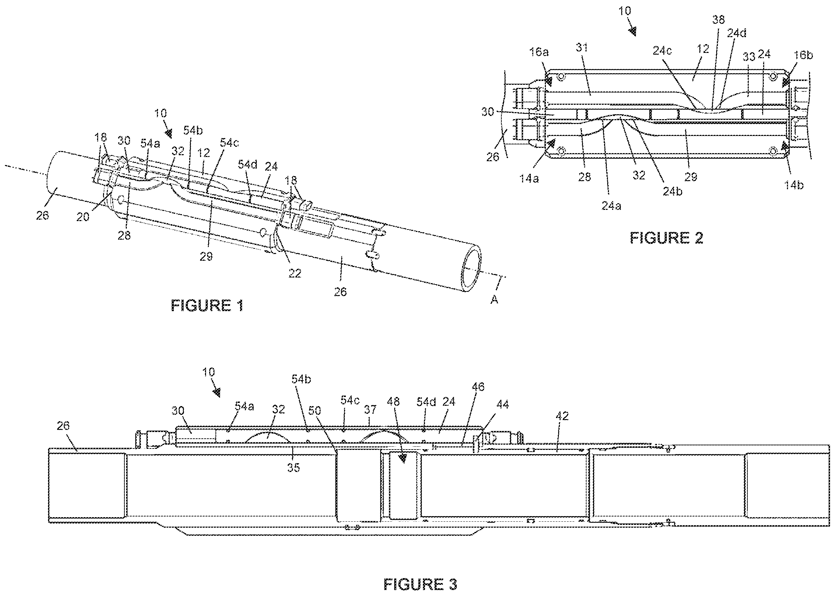

Figures 1 to 3 illustrate an isolation valve 10 in cross-sectional view. The isolation valve 10 comprises a valve body 12 located externally of a tubular 26. In this example, the isolation valve 10 is mounted on the tubular 26; however, in other examples the isolation valve 10 may be integrally formed with the tubular 26, for example by additive manufacturing.

A first flow path portion 28 extends within the valve body 12 between a first tube inlet 14a and a first valve inlet port 24a. A second flow path portion 29 extends within the valve body 12 between a first valve outlet port 24b and a first tube outlet 14b. The first valve inlet port 24a and the first valve outlet port 24b are in communication with a valve pocket 30 defined by the valve body 12. Optionally, a third flow path portion 31 extends within the valve body 12 between a second tube inlet 16a and a second valve inlet port 24c, and a fourth flow path portion 33 extends within valve body 12 between a second valve outlet port 24d and a second tube outlet 16d. The first and second tube inlets 14a, 16a are connectable to inlet tubes (not shown) and the first and second tube outlets 14b, 16b are connectable to outlet tube (not shown), which may be inlet and outlet shunt tubes.

The first and second tube inlets 14a, 14b are formed on a first end face 20 of the valve body 12, and the first and second tube outlets 16a, 16b are formed on a second end face 22 of the valve body 12. Coupling mechanisms 18 are provided at the inlet 14a, 14b and outlets 16a, 16b for connection to inlet and outlet tubes (not shown).

The valve pocket 32 is located within the valve body 12 between internal and external surfaces 35, 37 of the valve body 12, with the internal surface 35 of the valve body 12 engaging an external surface of the tubular 26. The isolation valve 10 includes a valve rod 24 disposed in the valve pocket 30 between the first/second flow path ports 24, 26 and the third/fourth flow path portions 31/33. The valve rod 24 is moveable within the valve pocket 30 between an open position and a closed position.

In the open position the valve rod 24 permits communication between the first tube inlet 14a and the first tube outlet 14b as well as the second tube inlet 16a and second tube outlet 16b. In the closed position the valve rod 24 isolates the first tube inlet 14a and the first tube outlet 14b from each other as well as the second tube inlet 16a and second tube outlet 16b from each other.

The tubular 26 is configured to be connected to or form part of a tubular string in a wellbore. The valve rod 24 includes a longitudinal axis arranged in an offset, parallel manner with respect to a central, longitudinal axis A of the tubular 26.

The first and second flow path portions 28, 29 include circumferential and/or lateral components (for example, curved components) that direct the flow portions 28, 29 towards the valve pocket 30. The valve body 12 defines a flow guide 32 permitting communication between the first and second flow path portions 28, 29 (and thus the first and second tube inlets 14a, 16a and the respective first and second tube outlets 14b, 16b) when the valve rod 24 is in the open position, as illustrated in Figures 1 to 3. In this example, the flow guide 32 includes a recess or pocket formed in a side of the valve rod 24. The valve rod 24 comprises a second flow guide 38 axially spaced from the flow guide 32 and of a similar description to the first flow guide 32.

The isolation valve 10 may provide a number of technical benefits. For example, in a gravel packing operation, the isolation valve 10 may be deployed with the valve rod 24 in the open position to permit a slurry of fluid and proppants to pass through the valve 10 unimpeded. Once the gravel packing operation has been completed, the valve rod 24 may be moved to the closed position to isolate the first and second tube inlets 14a, 14b and the respective first and second tube outlets 16a, 16b from each other preventing unwanted fluids (for example, gas which has migrated from the surrounding formation) to travel uphole, for example to surface. Furthermore, the provision of the valve rod 24 disposed in valve pocket 30 defined by the valve body 12 provides for a compact design, which is particularly beneficial for applications performed in restricted spaces, such as downhole in a wellbore.

The third and fourth flow path portions 31, 33 are generally similar to the first and second flow path portions 28, 29, therefore a detailed description of the third and fourth flow path portions 31, 33 have been omitted for brevity.

The curved components of the first and/or second flow path portions 28, 29 include an increased flow area relative to the flow area of the first tube inlet 14a and the first tube outlet 14b. The increased flow area may reduce a flowrate through the first and/or second flow path portions 28, 29, which may be beneficial in certain downhole operations such as gravel packing operations. Gravel packing operations require a mixture of proppants and fluids to be transported downhole. Such a mixture can be highly erosive, especially since the proppants (having a higher inertia than the fluid) may collide with the outer surface of the curved components causing erosive damage. Therefore, providing these sections of the first and/or second flow path portions 28, 29 with an enlarged flow area may reduce the flowrate of the mixture entering these sections before the proppants can hit the outer surface of the curved component. This may assist in mitigating erosive damage to the isolation valve 10, as well as reducing the risk of blockage.

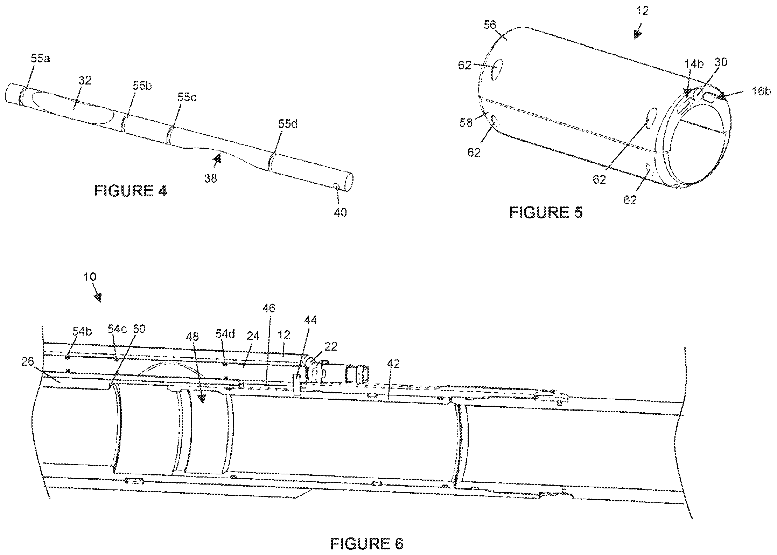

With reference to Figures 4 to 6, the isolation valve comprises a drive arrangement including a valve actuator 42 and drive member, such as a pin 44. The valve rod 24 comprises a connector 40 in the form of an indent formed in the valve rod 24 that receives the pin 44. The valve rod 24 translates axially within the valve pocket 30 of the valve body 12 between the open and closed positions, moving the first flow guide 32 between alignment with the first and second flow path portions 28, 29 and un-alignment with first and second flow path portions 28, 29.

The valve actuator 42 is disposed internally of the tubular 26 and in this example includes a sliding sleeve. The tubular 26 defines an axial slot 46 oriented such that the axial slot 46 is positioned between the valve actuator 42 and the valve rod 24, so that the pin 44 can radially extend through the axial slot 46 to connect with the valve rod 24. The axial slot 46 comprises a length sufficient to allow the drive member 44 to travel enough distance to move the valve rod 24 between the open and closed positions.

The valve actuator 42 includes a latch mechanism 48 including a profile configured to be engaged by a downhole tool (such as a shifting tool) to operate the drive arrangement and move the valve rod 24 from the open position to the closed position. The tubular 26 comprises an axial shoulder 50 for limiting axial movement of the valve actuator 42 and protecting the drive member 44 and axial slot 46 from axial loads and damage.

In an example, the isolation valve 10 may be run-in downhole with the valve rod 24 in the open position and the valve actuator 42 configured to move the valve rod 24 to the closed position. Such an application of the isolation valve 10 may be particularly useful when closing the first and second flow passages 14, 16 is required only after a particular operation has been completed. This may be sufficient depending on the application of the valve 10. For example, in a gravel packing operation it may be necessary to only close the flow passages 14, 16 after the gravel packing operation has been completed. In other example applications, however, the valve actuator 42 may be configured to move the valve rod 24 back and forth between the open and closed positions as required.

The valve rod 24 comprises a sealing arrangement configured to sealingly isolate the first and second tube inlets 14a, 14b and the respective first and second tube outlets 16a, 16b from each other when the valve rod 24 is in the closed position. Furthermore, when the valve rod 24 is in the open position, the sealing arrangement is configured to seal the valve rod 24 against the valve pocket 30 so as to seal the first valve inlet port 24a, the first valve outlet port 24b and the first flow guide 32 together. The sealing arrangement is further configured to seal the second valve inlet port 24c, the second valve outlet port 24d and the second flow guide 38 together, when the valve rod is in the open position. The sealing arrangement includes a plurality of sealing elements 54a, 54b, 54c, 54d disposed in circumferential grooves 55a, 55b, 55c, 55d formed in the valve rod 24, with the sealing elements 54a, 54b, 54c, 54d including dynamic seals permitting translation of the valve rod 24 within the valve body 12. As best seen in Figure 1, when the valve rod 24 is in the open position the sealing elements 54a, 54b straddle the first flow guide 32 and the sealing elements 54c, 54d straddle the second flow guide 38.

Referring to Figure 5, the valve body 12 comprises a clamshell arrangement including first and second segments 56, 58 bolted together via bolt holes 62. The first segment 56 includes the first to fourth flow path portions 28, 29, 31, 33 and the valve pocket 30, while the second segment 58 (diametrically opposite the first segment 56) defines a fastener mechanism for securing the valve body 12 on the tubular 26. The valve body 12 has an eccentric shape with the first segment 56 having a greater thickness than the second segment 58. However, in other examples, the second segment 58 may include a second isolation valve including the same or similar features as the first isolation valve 10, and being configured for operation together with the isolation valve 10, for example under action of a common valve actuator, such as valve actuator 42.

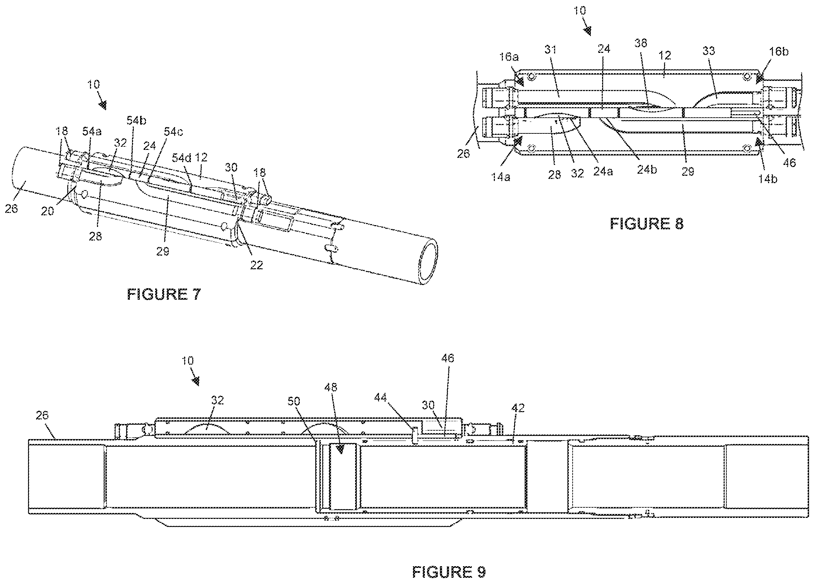

To close the first and second flow passages 14, 16 (and isolate the tube inlets 14a, 14b and the tube outlets 16a, 16b from each other) the valve rod 24 is moved to the closed position, as illustrated in Figures 7 to 9. In this example, the valve rod 24 translates within the valve pocket 30 of the valve body 12 to move from the open position to the closed position under action of the valve actuator 42. As the valve rod 24 translates within the valve body 12 the first flow guide 32 moves from alignment with the first and second flow path portions 28, 29 to misalignment with the first and second flow path portions 28, 29, thereby closing the first passage 14. Simultaneously, as the valve rod 24 translates within the valve body 12 the second flow guide 38 moves from alignment with the third and fourth flow path portions 31, 33 to misalignment with the third and fourth flow path portions 31, 33.

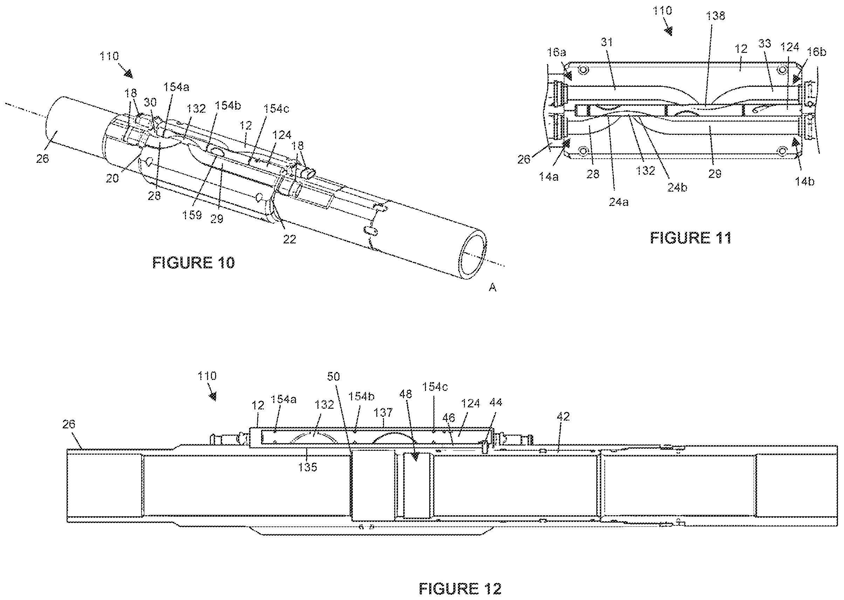

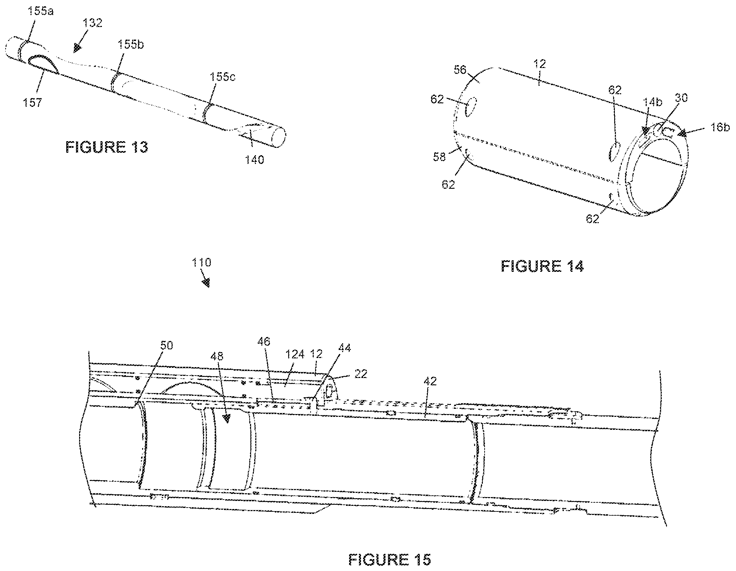

Figures 10 to 15 illustrate an alternative valve rod 124, in an open position. The valve rod 124 is configured to rotate (instead of translate) within the valve pocket 30 of the valve body 24. The valve rod 124 includes first and second flow guides 132, 138 and a sealing arrangement comprising a plurality of sealing elements 154a, 154b, 154c disposed in circumferential grooves 155a, 155b, 155c, with the sealing elements 154a, 154b, 154c including dynamic seals permitting rotation of the valve rod 124 relative to the valve body 12. As best seen in Figure 10, when the valve rod 124 is in the open position, the sealing elements 154a, 154b straddle the first flow guide 32 and the sealing elements 154b, 154c straddle the second flow guide 138. This seals the valve rod 24 against the valve pocket 30 so as to seal the first valve inlet port 24a, the first valve outlet port 24b and the first flow guide 32 together, as well as sealing the second valve inlet port 24c, the second valve outlet port 24d and the second flow guide 38 together.

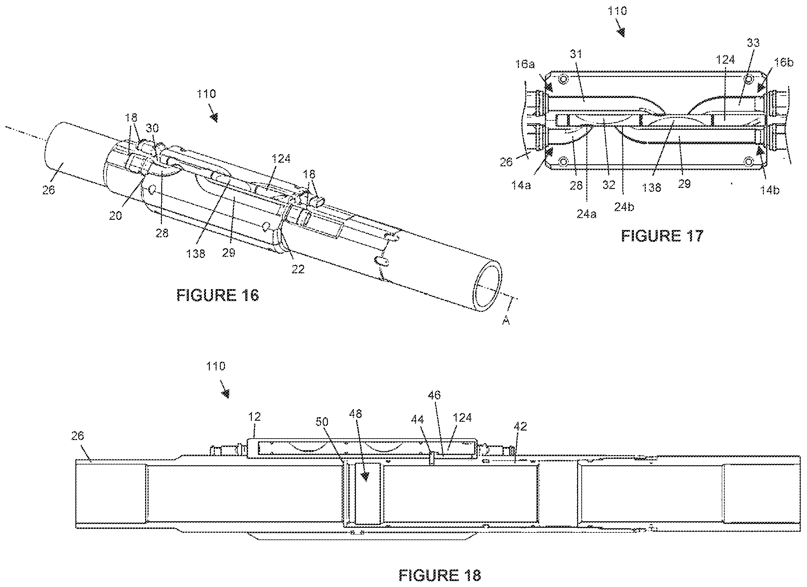

Referring to Figures 16 to 18, the valve rod 124 further includes a side sealing element 157 located on a side face of the valve rod 124 and configured to seal around the first flow path portion 28 when the valve rod is in the closed position, thereby isolating the first and second flow path portions 28, 29. The valve rod 124 comprises an additional side sealing element 159 (illustrated in Figure 10) configured to seal the third flow path portion 31, when the valve rod 124 is in the closed position. In this example, the valve rod 124 is rotated about its longitudinal axis within the valve pocket 30 from the open position to the closed position. The valve rod 124 includes a connector in the form of a helical slit 140 formed in the valve rod 124, with the valve actuator being operated in the same manner as described hereinabove to produce rotation of the valve rod 124 within the vale body 12 (that is, translation of the pin 44 relative to the helical slit produces rotation of the valve rod 124). The valve rod 124 may include bearing surfaces at either end to permit rotation of the valve rod 124 within the valve body 12.

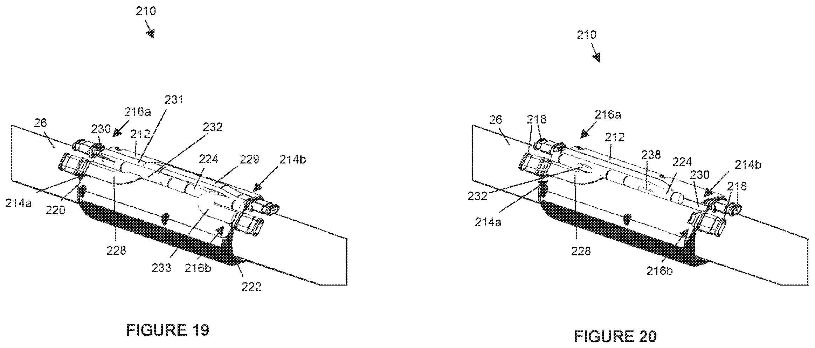

Figures 19 and 20 illustrate an alternative isolation valve 210 comprising many of the same features as the isolation valve 10, with like features being assigned like references signs incremented by 200. The isolation valve 210 is configured to provide crossover flow with respect to the first/second flow path portions 228, 229 and the third/fourth flow path portions 231, 233. In this example, the first tube inlet 214a of the first flow passage 214 is axially aligned with the second tube outlet 216b, and the second tube inlet 216a is axially aligned with the first tube outlet 214b. The first and second flow guides 232, 238 comprise passageways extending through the valve rod permitting flow to travel from one side of the valve rod 224 to the other side. In other examples, the isolation valve 210 may be configured to provide mixing of flow in the first/second flow path portions 228, 229 and the third/fourth flow path portions 231, 233 by at least partly merging the first/second flow path portions 228, 229 and the third/fourth flow path portions 231, 233.

In this example, the valve rod 224 is configured to translate within the valve pocket 230 of the valve body 212 between the open and closed positions in a similar manner to the valve rod 24. However, in other examples the valve rod 224 may be configured in a similar manner to the valve rod 124 and may rotate within the valve body 212 between the open and closed positions.

## Claims

1. An isolation valve (10) comprising:
a valve body (12) mountable on or integrally formed with a tubular, the valve body defining an internal surface (35) and an external surface (37), the internal surface (35) configured to extend around at least a portion of the tubular, wherein the valve body (12) defines a valve pocket (30) located between the internal and external surfaces (35, 37) of the valve body (12);
a first flow path portion (28) extending within the valve body (12) between a tube inlet (14a) and a valve inlet port (24a), the tube inlet (14a) being connectable to an inlet tube, and the valve inlet port (24a) being in communication with the valve pocket (30);
a second flow path portion (29) extending within the valve body (12) between a valve outlet port (24b) and a tube outlet (14b), the valve outlet port (24b) being in communication with the valve pocket (30), and the tube outlet (14b) being connectable to an outlet tube; and
a valve rod (24) disposed within the valve pocket (30) of the valve body (12), the valve rod (24) being moveable within the valve pocket (30) between an open position in which the valve inlet port (24a) and valve outlet port (24b) are in communication with each other, and a closed position in which the valve inlet port (24a) and the valve outlet port (24b) are isolated from each other, wherein the valve rod (24) comprises a flow guide (32) comprising a recess formed in a side of the valve rod (24), wherein, when the valve rod (24) is in the open position, the flow guide (32) permits communication between the valve inlet port (24a) and the valve outlet port (24b).

2. The isolation comprising to claim 1, wherein one or both of the first and second flow path portions (28, 29) comprise a nonlinear component.

3. The isolation valve (10) according to claim 1 or 2, wherein the valve rod (24) is configured to translate axially within the valve pocket (30) between the open and closed positions.

4. The isolation valve (110) according to any preceding claim, wherein the valve rod (124) is configured to rotate within the valve pocket (30) between the open and closed positions.

5. The isolation valve (10) according to any preceding claim, wherein the valve rod (24) comprises a sealing arrangement configured to sealingly isolate the valve inlet port (24a) and the valve outlet port (24b) from each other when the valve rod (24) is in the closed position.

6. The isolation valve (10) according to claim 5, wherein the sealing arrangement comprises a plurality of sealing elements (54) disposed along a length of the valve rod (24); optionally wherein two of the plurality of sealing elements (54) are located either side of the flow guide (32).

7. The isolation valve (10) according to any preceding claim, wherein the tube inlet (14a) is located on a first end face of the valve body (12) and the tube outlet (14b) is located on a second end face of the valve body (12) opposite to the first end face; and/or wherein the valve body (12) comprises a clamshell arrangement for mounting on the tubular.

8. The isolation valve (10) according to any preceding claim, wherein the valve body (12) comprises an eccentric shape.

9. The isolation valve (10) according to any preceding claim, comprising a drive arrangement, wherein the drive arrangement comprises a valve actuator (42) configured to move the valve rod (24) between the open and closed positions.

10. The isolation valve (10) according to claim 9, wherein the drive arrangement comprises a drive member (44) configured connect the valve rod (24) to the valve actuator (42).

11. The isolation valve (10) according to any preceding claim:
wherein a third flow path portion (31) extends within the valve body (12) between a second valve inlet port (24c) and a second tube inlet port, the second valve inlet port (24c) in communication with the valve pocket (30) and the second tube inlet port connectable to a second inlet tube, and
wherein a fourth flow path portion (33) extends within the valve body (12) between a second valve outlet port (24d) and a second tube outlet (14b), the second valve outlet port (24d) in communication with the valve pocket (30) and the second tube outlet (14b) connectable to a second outlet tube;
optionally wherein in the open position the valve rod (24) permits communication between the second valve inlet port (24c) and the second valve outlet port (24d), and in the closed position the valve rod (24) isolates the second valve inlet port (24c) and the second valve outlet port (24d) from each other.

12. The isolation valve (10) according to any preceding, wherein the valve rod (24) comprises a second flow guide (38).

13. The isolation valve (10) according to any preceding claim, wherein the isolation valve (10) is a shunt tube isolation valve, and wherein the tube inlet (14a) comprises a shunt tube inlet connectable to an inlet shunt tube and wherein the tube outlet (14b) comprises a shunt tube outlet connectable to an outlet shunt tube.

14. The isolation valve (10) according to any preceding claim, wherein the valve body (12) is partly or fully integrally formed with the tubular.

15. A method for isolating a tube, the method comprising:
providing an isolation valve (10) comprising a valve body (12) mounted on or integrally formed with a tubular, the valve body (12) defining an internal surface (35) and an external surface (37), the internal surface (35) configured to extend around at least a portion of the tubular, wherein the valve body (12) defines a valve pocket (30) located between the internal and external surfaces (35, 37) of the valve body (12), wherein a first flow path portion (28) extends within the valve body between a tube inlet (14a) and a valve inlet port (24a), the tube inlet (14a) being connectable to an inlet tube, and the valve inlet port (24a) being in communication with the valve pocket (30), and wherein a second flow path portion (29) extends within the valve body (12) between a valve outlet port (24b) and a tube outlet (14b), the valve outlet port (24b) being in communication with the valve pocket (30), and the tube outlet (14b) being connectable to an outlet tube;
providing a valve rod (24) disposed in the valve pocket (30) in one of an open position and a closed position, wherein in the open position the valve inlet port (24a) and valve outlet port (24b) are in communication with each other, and in the closed position the valve inlet port (24a) and valve outlet port (24b) are isolated from each other, wherein the valve rod (24) comprises a flow guide (32) comprising a recess formed in a side of the valve rod (24), wherein, when the valve rod (24) is in the open position, the flow guide (32) permits communication between the valve inlet port (24a) and the valve outlet port (24b); and
moving the valve rod (24) within the valve pocket (30) to the other of the open position and the closed position.

## Patentansprüche

1. Absperrventil (10), umfassend:
einen Ventilkörper (12), der auf einem Rohr montierbar oder einstückig mit diesem ausgebildet ist, wobei der Ventilkörper eine Innenfläche (35) und eine Außenfläche (37) definiert, wobei die Innenfläche (35) so konfiguriert ist, dass sie sich um mindestens einen Abschnitt des Rohrs erstreckt, wobei der Ventilkörper (12) eine Ventilkammer (30) definiert, die sich zwischen der Innen- und der Außenfläche (35, 37) des Ventilkörpers (12) befindet;
einen ersten Strömungswegabschnitt (28), der sich innerhalb des Ventilkörpers (12) zwischen einem Rohreinlass (14a) und einem Ventileinlassanschluss (24a) erstreckt, wobei der Rohreinlass (14a) mit einem Einlassrohr verbindbar ist und der Ventileinlassanschluss (24a) mit der Ventilkammer (30) in Verbindung steht;
einen zweiten Strömungswegabschnitt (29), der sich innerhalb des Ventilkörpers (12) zwischen einem Ventilauslassanschluss (24b) und einem Rohrauslass (14b) erstreckt, wobei der Ventilauslassanschluss (24b) mit der Ventilkammer (30) in Verbindung steht und der Rohrauslass (14b) mit einem Auslassrohr verbindbar ist; und
einen Ventilschaft (24), der in der Ventilkammer (30) des Ventilkörpers (12) angeordnet ist, wobei der Ventilschaft (24) in der Ventilkammer (30) zwischen einer offenen Stellung, in welcher der Ventileinlassanschluss (24a) und der Ventilauslassanschluss (24b) miteinander in Verbindung stehen, und einer geschlossenen Stellung, in welcher der Ventileinlassanschluss (24a) und der Ventilauslassanschluss (24b) voneinander isoliert sind, bewegbar ist, wobei der Ventilschaft (24) eine Strömungsführung (32) umfasst, die eine in einer Seite des Ventilschafts (24) ausgebildete Aussparung umfasst, wobei, wenn der Ventilschaft (24) in der offenen Stellung ist, die Strömungsführung (32) eine Verbindung zwischen dem Ventileinlassanschluss (24a) und dem Ventilauslassanschluss (24b) ermöglicht.

2. Absperrventil nach Anspruch 1, wobei einer oder beide des ersten und des zweiten Strömungspfadabschnitts (28, 29) eine nichtlineare Komponente umfasst.

3. Absperrventil (10) nach Anspruch 1 oder 2, wobei der Ventilschaft (24) dafür konfiguriert ist, sich innerhalb der Ventilkammer (30) axial zwischen der offenen und der geschlossenen Stellung zu verschieben.

4. Absperrventil (110) nach einem vorstehenden Anspruch, wobei der Ventilschaft (124) dafür konfiguriert ist, sich innerhalb der Ventilkammer (30) zwischen der offenen und der geschlossenen Stellung zu drehen.

5. Absperrventil (10) nach einem vorstehenden Anspruch, wobei der Ventilschaft (24) eine Dichtungsanordnung umfasst, die dafür konfiguriert ist, den Ventileinlassanschluss (24a) und den Ventilauslassanschluss (24b) abdichtend voneinander zu trennen, wenn der Ventilschaft (24) in der geschlossenen Stellung ist.

6. Absperrventil (10) nach Anspruch 5, wobei die Dichtungsanordnung eine Vielzahl von Dichtungselementen (54) umfasst, die entlang einer Länge des Ventilschafts (24) angeordnet sind; wobei optional zwei der Vielzahl von Dichtungselementen (54) auf beiden Seiten der Strömungsführung (32) angeordnet sind.

7. Absperrventil (10) nach einem vorstehenden Anspruch, wobei der Rohreinlass (14a) sich an einer ersten Stirnfläche des Ventilkörpers (12) befindet und der Rohrauslass (14b) sich an einer zweiten Stirnfläche des Ventilkörpers (12) gegenüber der ersten Stirnfläche befindet; und/oder wobei der Ventilkörper (12) eine Muschelschalenanordnung zum Anbringen auf dem Rohr umfasst.

8. Absperrventil (10) nach einem vorstehenden Anspruch, wobei der Ventilkörper (12) eine exzentrische Form aufweist.

9. Absperrventil (10) nach einem vorstehenden Anspruch, eine Antriebsanordnung umfassend, wobei die Antriebsanordnung eine Ventilbetätigungsvorrichtung (42) umfasst, die dafür konfiguriert ist, den Ventilschaft (24) zwischen der offenen und der geschlossenen Stellung zu bewegen.

10. Absperrventil (10) nach Anspruch 9, wobei die Antriebsanordnung ein Antriebselement (44) umfasst, das dafür konfiguriert ist, den Ventilschaft (24) mit der Ventilbetätigungsvorrichtung (42) zu verbinden.

11. Absperrventil (10) nach einem vorstehenden Anspruch:
wobei ein dritter Strömungswegabschnitt (31) sich innerhalb des Ventilkörpers (12) zwischen einem zweiten Ventileinlassanschluss (24c) und einem zweiten Rohreinlassanschluss erstreckt, wobei der zweite Ventileinlassanschluss (24c) mit der Ventilkammer (30) in Verbindung steht und der zweite Rohreinlassanschluss mit einem zweiten Einlassrohr verbindbar ist, und
wobei ein vierter Strömungswegabschnitt (33) sich innerhalb des Ventilkörpers (12) zwischen einem zweiten Ventilauslassanschluss (24d) und einem zweiten Rohrauslass (14b) erstreckt, wobei der zweite Ventilauslassanschluss (24d) mit der Ventilkammer (30) in Verbindung steht und der zweite Rohrauslass (14b) mit einem zweiten Auslassrohr verbindbar ist;
wobei optional der Ventilschaft (24) in der offenen Stellung eine Verbindung zwischen dem zweiten Ventileinlassanschluss (24c) und dem zweiten Ventilauslassanschluss (24d) ermöglicht und der Ventilschaft (24) in der geschlossenen Stellung den zweiten Ventileinlassanschluss (24c) und den zweiten Ventilauslassanschluss (24d) voneinander isoliert.

12. Absperrventil (10) nach einem vorstehenden Anspruch, wobei der Ventilschaft (24) eine zweite Strömungsführung (38) umfasst.

13. Absperrventil (10) nach einem vorstehenden Anspruch, wobei das Absperrventil (10) ein Absperrventil mit Zweigrohr ist und wobei der Rohreinlass (14a) einen Zweigrohreinlass umfasst, der mit einem Einlasszweigrohr verbindbar ist, und wobei der Rohrauslass (14b) einen Zweigrohrauslass umfasst, der mit einem Auslasszweigrohr verbindbar ist.

14. Absperrventil (10) nach einem vorstehenden Anspruch, wobei der Ventilkörper (12) teilweise oder vollständig einstückig mit dem Rohr ausgebildet ist.

15. Verfahren zum Absperren eines Rohrs, wobei das Verfahren umfasst:
Bereitstellen eines Absperrventils (10), das einen Ventilkörper (12) umfasst, der auf einem Rohr montiert oder einstückig mit diesem ausgebildet ist, wobei der Ventilkörper (12) eine Innenfläche (35) und eine Außenfläche (37) definiert, wobei die Innenfläche (35) so konfiguriert ist, dass sie sich um mindestens einen Abschnitt des Rohrs erstreckt, wobei der Ventilkörper (12) eine Ventilkammer (30) definiert, die sich zwischen der Innen- und der Außenfläche (35, 37) des Ventilkörpers (12) befindet, wobei ein erster Strömungswegabschnitt (28) sich innerhalb des Ventilkörpers zwischen einem Rohreinlass (14a) und einem Ventileinlassanschluss (24a) erstreckt, wobei der Rohreinlass (14a) mit einem Einlassrohr verbindbar ist und der Ventileinlassanschluss (24a) mit der Ventilkammer (30) in Verbindung steht, und wobei ein zweiter Strömungswegabschnitt (29) sich innerhalb des Ventilkörpers (12) zwischen einem Ventilauslassanschluss (24b) und einem Rohrauslass (14b) erstreckt, wobei der Ventilauslassanschluss (24b) mit der Ventilkammer (30) in Verbindung steht und der Rohrauslass (14b) mit einem Auslassrohr verbindbar ist;
Bereitstellen eines Ventilschafts (24), der in der Ventilkammer (30) in einer von einer offenen Stellung und einer geschlossenen Stellung angeordnet ist, wobei in der offenen Stellung der Ventileinlassanschluss (24a) und der Ventilauslassanschluss (24b) miteinander in Verbindung stehen und in der geschlossenen Stellung der Ventileinlassanschluss (24a) und der Ventilauslassanschluss (24b) voneinander isoliert sind, wobei der Ventilschaft (24) eine Strömungsführung (32) umfasst, die eine in einer Seite des Ventilschafts (24) ausgebildete Aussparung umfasst, wobei, wenn der Ventilschaft (24) in der offenen Stellung ist, die Strömungsführung (32) eine Verbindung zwischen dem Ventileinlassanschluss (24a) und dem Ventilauslassanschluss (24b) ermöglicht; und
Bewegen des Ventilschafts (24) innerhalb der Ventilkammer (30) in die andere der offenen Stellung und der geschlossenen Stellung.

## Revendications

1. Soupape d'isolation (10) comprenant :
un corps de soupape (12) pouvant être monté sur ou formé d'un seul tenant avec un élément tubulaire, le corps de soupape définissant une surface interne (35) et une surface externe (37), la surface interne (35) étant configurée pour s'étendre autour d'au moins une partie de l'élément tubulaire, dans laquelle le corps de soupape (12) définit une poche de soupape (30) située entre les surfaces interne et externe (35, 37) du corps de soupape (12) ;
une première partie de trajet d'écoulement (28) s'étendant à l'intérieur du corps de soupape (12) entre une entrée de tube (14a) et un orifice d'entrée de soupape (24a), l'entrée de tube (14a) pouvant être connectée à un tube d'entrée, et l'orifice d'entrée de soupape (24a) étant en communication avec la poche de soupape (30) ;
une deuxième partie de trajet d'écoulement (29) s'étendant à l'intérieur du corps de soupape (12) entre un orifice de sortie de soupape (24b) et une sortie de tube (14b), l'orifice de sortie de soupape (24b) étant en communication avec la poche de soupape (30), et la sortie de tube (14b) pouvant être connectée à un tube de sortie ; et
une tige de soupape (24) disposée à l'intérieur de la poche de soupape (30) du corps de soupape (12), la tige de soupape (24) étant mobile à l'intérieur de la poche de soupape (30) entre une position ouverte dans laquelle l'orifice d'entrée de soupape (24a) et l'orifice de sortie de soupape (24b) sont en communication l'un avec l'autre, et une position fermée dans laquelle l'orifice d'entrée de soupape (24a) et l'orifice de sortie de soupape (24b) sont isolés l'un de l'autre, dans laquelle la tige de soupape (24) comprend un guide d'écoulement (32) comprenant un évidement formé dans un côté de la tige de soupape (24), dans laquelle, lorsque la tige de soupape (24) est dans la position ouverte, le guide d'écoulement (32) permet une communication entre l'orifice d'entrée de soupape (24a) et l'orifice de sortie de soupape (24b).

2. Soupape d'isolation selon la revendication 1, dans laquelle une ou les deux des première et deuxième parties de trajet d'écoulement (28, 29) comprennent un composant non linéaire.

3. Soupape d'isolation (10) selon la revendication 1 ou 2, dans laquelle la tige de soupape (24) est configurée pour se déplacer en translation axialement à l'intérieur de la poche de soupape (30) entre les positions ouverte et fermée.

4. Soupape d'isolation (110) selon une quelconque revendication précédente, dans laquelle la tige de soupape (124) est configurée pour tourner à l'intérieur de la poche de soupape (30) entre les positions ouverte et fermée.

5. Soupape d'isolation (10) selon une quelconque revendication précédente, dans laquelle la tige de soupape (24) comprend un agencement d'étanchéité configuré pour isoler de manière étanche l'orifice d'entrée de soupape (24a) et l'orifice de sortie de soupape (24b) l'un de l'autre lorsque la tige de soupape (24) est dans la position fermée.

6. Soupape d'isolation (10) selon la revendication 5, dans laquelle l'agencement d'étanchéité comprend une pluralité d'éléments d'étanchéité (54) disposés le long d'une longueur de la tige de soupape (24) ; facultativement dans laquelle deux de la pluralité d'éléments d'étanchéité (54) sont situés de chaque côté du guide d'écoulement (32).

7. Soupape d'isolation (10) selon une quelconque revendication précédente, dans laquelle l'entrée de tube (14a) est située sur une première face d'extrémité du corps de soupape (12) et la sortie de tube (14b) est située sur une seconde face d'extrémité du corps de soupape (12) opposée à la première face d'extrémité ; et/ou dans laquelle le corps de soupape (12) comprend un agencement de coques pour montage sur l'élément tubulaire.

8. Soupape d'isolation (10) selon une quelconque revendication précédente, dans laquelle le corps de soupape (12) comprend une forme excentrique.

9. Soupape d'isolation (10) selon une quelconque revendication précédente, comprenant un agencement d'entraînement, dans laquelle l'agencement d'entraînement comprend un actionneur de soupape (42) configuré pour déplacer la tige de soupape (24) entre les positions ouverte et fermée.

10. Soupape d'isolation (10) selon la revendication 9, dans laquelle l'agencement d'entraînement comprend un élément d'entraînement (44) configuré pour connecter la tige de soupape (24) à l'actionneur de soupape (42).

11. Soupape d'isolation (10) selon une quelconque revendication précédente :
dans laquelle une troisième partie de trajet d'écoulement (31) s'étend à l'intérieur du corps de soupape (12) entre un second orifice d'entrée de soupape (24c) et un second orifice d'entrée de tube, le second orifice d'entrée de soupape (24c) étant en communication avec la poche de soupape (30) et le second orifice d'entrée de tube pouvant être connecté à un second tube d'entrée, et
dans laquelle une quatrième partie de trajet d'écoulement (33) s'étend à l'intérieur du corps de soupape (12) entre un second orifice de sortie de soupape (24d) et une seconde sortie de tube (14b), le second orifice de sortie de soupape (24d) étant en communication avec la poche de soupape (30) et la seconde sortie de tube (14b) pouvant être connectée à un second tube de sortie ;
facultativement dans laquelle, dans la position ouverte, la tige de soupape (24) permet une communication entre le second orifice d'entrée de soupape (24c) et le second orifice de sortie de soupape (24d), et dans la position fermée, la tige de soupape (24) isole le second orifice d'entrée de soupape (24c) et le second orifice de sortie de soupape (24d) l'un de l'autre.

12. Soupape d'isolation (10) selon une quelconque revendication précédente, dans laquelle la tige de soupape (24) comprend un second guide d'écoulement (38).

13. Soupape d'isolation (10) selon une quelconque revendication précédente, dans laquelle la soupape d'isolation (10) est une soupape d'isolation à tube de dérivation, et dans laquelle l'entrée de tube (14a) comprend une entrée de tube de dérivation pouvant être connectée à un tube de dérivation d'entrée et dans laquelle la sortie de tube (14b) comprend une sortie de tube de dérivation pouvant être connectée à un tube de dérivation de sortie.

14. Soupape d'isolation (10) selon une quelconque revendication précédente, dans laquelle le corps de soupape (12) est partiellement ou entièrement formé d'un seul tenant avec l'élément tubulaire.

15. Procédé d'isolation d'un tube, le procédé comprenant les étapes consistant à :
fournir une soupape d'isolation (10) comprenant un corps de soupape (12) monté sur ou formé d'un seul tenant avec un élément tubulaire, le corps de soupape (12) définissant une surface interne (35) et une surface externe (37), la surface interne (35) étant configurée pour s'étendre autour d'au moins une partie de l'élément tubulaire, dans lequel le corps de soupape (12) définit une poche de soupape (30) située entre les surfaces interne et externe (35, 37) du corps de soupape (12), dans lequel une première partie de trajet d'écoulement (28) s'étend à l'intérieur du corps de soupape entre une entrée de tube (14a) et un orifice d'entrée de soupape (24a), l'entrée de tube (14a) pouvant être connectée à un tube d'entrée, et l'orifice d'entrée de soupape (24a) étant en communication avec la poche de soupape (30), et dans lequel une seconde partie de trajet d'écoulement (29) s'étend à l'intérieur du corps de soupape (12) entre un orifice de sortie de soupape (24b) et une sortie de tube (14b), l'orifice de sortie de soupape (24b) étant en communication avec la poche de soupape (30), et la sortie de tube (14b) pouvant être connectée à un tube de sortie ;
fournir une tige de soupape (24) disposée dans la poche de soupape (30) dans l'une d'une position ouverte et d'une position fermée, dans lequel dans la position ouverte, l'orifice d'entrée de soupape (24a) et l'orifice de sortie de soupape (24b) sont en communication l'un avec l'autre, et dans la position fermée, l'orifice d'entrée de soupape (24a) et l'orifice de sortie de soupape (24b) sont isolés l'un de l'autre, dans lequel la tige de soupape (24) comprend un guide d'écoulement (32) comprenant un évidement formé sur un côté de la tige de soupape (24), dans lequel, lorsque la tige de soupape (24) est dans la position ouverte, le guide d'écoulement (32) permet une communication entre l'orifice d'entrée de soupape (24a) et l'orifice de sortie de soupape (24b) ; et
déplacer la tige de soupape (24) à l'intérieur de la poche de soupape (30) vers l'autre de la position ouverte et de la position fermée.
